# EUROPÄISCHE PATENTANMELDUNG

(11) **EP 3 787 163 A2**
(43) Veröffentlichungstag der Anmeldung: **03.03.2021**
(21) Anmeldenummer: 20192612.8
(22) Anmeldetag: 25.08.2020
(51) Int. Cl.: H02K 41/03, F16C 33/32, F16C 29/06, H02K 7/08

(54) **ANTRIEBSVORRICHTUNG MIT TUBULAREM LINEARMOTOR**

(30) Priorität: 26.08.2019 EP 19193649
(71) Anmelder: NTI AG, 8957 Spreitenbach (CH)
(72) Erfinder: Rohner, Ronald, 8967 Widen (CH)
(74) Vertreter: Bohest AG

(57) **Zusammenfassung**

Eine Antriebsvorrichtung umfasst mindestens eine tubularen Linearmotor (M1; M1'; M2), der einen zylindrischen Läufer (20; 120) und einen rohrförmigen Stator (10) mit einem zylinderförmigen magnetischen Rückschluss (11) und einem zum magnetischen Rückschluss (11) koaxialen Durchgangsloch (13) aufweist. Im magnetischen Rückschluss (11) sind elektrische Anrtriebswicklungen (12; 112) angeordnet. Der Läufer (20; 120) weist ein nicht-magnetisches Läuferrohr (21) auf, in welchem Permanentmagnete (23) angeordnet sind. Der Läufer (20; 120) erstreckt sich koaxial durch das Durchgangsloch (13) und ist in seiner Längsrichtung relativ zum Stator (10) beweglich gelagert. Die Antriebsvorrichtung umfasst Linearkugellager (15; 115) und der Läufer (20; 120) des tubularen Linearmotors (M1; M1'; M2) ist in den Linearkugellagern (15; 115) gelagert.

## Beschreibung

Die vorliegende Erfindung betrifft eine Antriebsvorrichtung mit mindestens einem tubularen Linearmotor gemäss dem Oberbegriff des unabhängigen Patentanspruchs.

Unter Linearmotoren sind im Folgenden elektrische Antriebe zu verstehen, bei denen die lineare Bewegung direkt aus der elektromagnetischen Krafterzeugung ohne Einsatz von mechanischen Antriebskomponenten erzeugt wird. Linearmotoren sind schon seit Beginn der elektrischen Antriebstechnik bekannt. Der Durchbruch von Linearmotoren im industriellen Bereich als lineare Servomotoren erfolgte mit der kostengünstigen Verfügbarkeit von schneller Leistungselektronik und Mikroprozessortechnik. Parallel dazu entwickelten sich Linearmotoren auch in Bereichen wie der Bahntechnik als sogenannte Langstatormotoren.

Die grösste Verbreitung haben Linearmotoren bisher im Bereich der Handhabungstechnik und des allgemeinen Maschinenbaus, der Verpackungstechnik, der Lebensmittelverarbeitung oder des Sondermaschinenbaus. Dabei werden hauptsächlich zwei Bauformen eingesetzt, nämlich der sogenannte Flachlinearmotor und der tubulare Linearmotor. Bildlich gesprochen kann man sich den Flachlinearmotor durch das Aufschneiden und in die Fläche legen eines rotativen Elektromotors vorstellen. Dieser umfasst bekanntlich einen Stator und einen Rotor. Entsprechend umfasst ein Flachlinearmotor ebenfalls einen Stator und einen Rotor, wobei letzterer sinnvollerweise Läufer genannt wird (da er nicht rotiert). Grundsätzlich spielt es im Folgenden keine Rolle, ob der Stator oder der Läufer bewegt wird. Der Einfachheit halber wird unter dem Stator immer derjenige Teil des Linearmotors verstanden, in dem die elektrischen Antriebswicklungen angeordnet sind. Unter dem Läufer wird beim permanentmagnetisch erregten Linearmotor derjenige Motorteil verstanden, in welchem die Permanentmagnete untergebracht sind. Ein tubularer Linearmotor umfasst einen rohrförmigen Stator mit einem zylinderförmigen magnetischen Rückschluss und einem zum magnetischen Rückschluss koaxialen Durchgangsloch sowie einen Läufer mit einem nicht-magnetischen Läuferrohr, in welchem die Permanentmagnete angeordnet sind. Der Läufer erstreckt sich koaxial durch das Durchgangsloch und ist relativ zum Stator in diesem Durchgangsloch koaxial zum Stator bewegbar.

Grundsätzlich lassen sich alle Arten von elektrischen Motoren in dieser Weise als flache bzw. tubulare Linearmotoren realisieren. Aufgrund der geforderten Dynamik, Stellgüte und Leistungsdichte haben sich jedoch bei Linearmotoren ebenso wie bei den rotativen Servomotoren permanentmagneterregte Synchronmotoren im industriellen Bereich durchgesetzt.

Während die zum Einsatz kommenden Permanentmagnete, Sensortechnik und Elektronik bei flachen und tubularen Linearmotoren weitgehend identisch sind, existiert bezüglich der Lagerung des bewegten Motorteils ein bedeutender Unterschied zwischen den beiden Ausführungsformen der Linearmotoren.

Bei einem Flachlinearmotor sind üblicherweise die Permanentmagnete entlang einer Bahn auf einer langen Grundplatte angeordnet. Darüber bewegt sich ein Wagen, welcher rechts und links der Bahn auf der Grundplatte geführt ist. Auf diesem Wagen sind die Antriebswicklungen angeordnet sowie ein Rückschluss aus Eisen. Dadurch schliesst sich der Magnetkreis optimal, und im Bereich der Antriebswicklungen entsteht ein grösstmögliches magnetisches Feld. Allerdings entsteht durch den Rückschluss aus Eisen (z.B. eine Rückschlussplatte) eine grosse vertikale Anziehungskraft hin zu den Permanentmagneten auf der Grundplatte. Aus Sicht der Motortechnik ist es wichtig, den Abstand zwischen den Permanentmagneten und den Antriebswicklungen mit dem anliegenden Eisenrückschluss so gering wie möglich zu halten, um eine möglichst hohe Leistungsdichte zu erreichen. Allerdings ist die Anziehungskraft umgekehrt proportional zum Quadrat des Abstands zwischen den Permanentmagneten und dem Eisenrückschluss (je kleiner der Abstand, desto grösser die Anziehungskraft). Ein Verzicht auf den Eisenrückschluss ist zwar grundsätzlich möglich, reduziert allerdings die Motorleistung im zweistelligem Prozentbereich. Als logische Folge der starken magnetischen Anziehungskräfte muss daher der Wagen mit den Wicklungen und dem Rückschluss sehr stabil geführt werden. In den meisten Fällen werden dazu sogenannte Profilschienenführungen eingesetzt, bei denen ein Führungswagen, welcher über Wälzkörper (Kugeln oder Rollen) verfügt, auf hochgenauen Führungsschienen läuft. Die Schienen selbst sind rechts und links von den Permanentmagneten angeordnet. In Anwendungen wie bei Werkzeugmaschinen (Fräs-, Schleifmaschinen etc.), bei denen die Prozessbewegungen hochgenau und sehr belastbar ausgeführt werden müssen, sind ohnehin derartige Lagerungen vorzusehen, so dass der kostenmässige Aufwand und die bautechnische Grösse der Profilschienen nicht weiter ins Gewicht fällt. Bei allgemeinen Aufgaben wie etwa einer einfachen Schiebebewegung oder einer Pick-and-Place Anwendung müssen die Lager zumeist auf die Belastung durch diese magnetische Anziehung ausgelegt werden und nicht etwa auf die Anforderungen der Anwendung. Entsprechend sind die hohen Kosten und die grosse Baugrösse der aus Sicht der Anwendung überdimensionierten Lagerung negativ zu beurteilen.

Eine andere Situation ergibt sich bei einem tubularen Linearmotor. Aufgrund der rotationssymmetrischen Konstruktion ist leicht zu verstehen, dass sich die Anziehungskräfte der Permanentmagnete, die entlang der Symmetrieachse (Längsachse) angeordnet sind, in dem rotationssymmetrischen Eisenrückschluss des Stators idealerweise kompensieren. Das heisst, dass unter der Voraussetzung, dass alle Permanentmagnete dieselbe homogene Kraftverteilung aufweisen und alle mechanischen Toleranzen gleich null sind, der Läufer bei vertikal aufgestelltem Motor genau im Zentrum 'schweben' würde. In der Praxis tritt dieser Fall natürlich nie auf, weshalb der Läufer entweder innerhalb oder ausserhalb des Stators in einem Lager geführt werden muss. Der wesentliche Unterschied des tubularen Linearmotors zum Flachlinearmotor besteht allerdings darin, dass die Belastung der Lager durch die magnetischen Anziehungskräfte sehr gering ist. Diese magnetischen Anziehungskräfte entstehen bei einer zentrischen (koaxialen) Lagerung des Läufers einzig aufgrund der magnetischen und mechanischen Toleranzen. In industriellen Anwendungen haben sich für die Lagerung des Läufers bei tubularen Linearmotoren Lineargleitlager durchgesetzt, welche entweder ausserhalb des Stators oder innerhalb des Stators unter den Antriebswicklungen angebracht sind. Die üblicherweise als Lineargleitlager eingesetzten Kunststoffgleitlager werden durch die Permanentmagnete im Läufer nicht angezogen und bilden einen geeigneten Gleitpartner für die typischeweise aus Edelstahl hergestellten Läuferrohre. Grundsätzlich könnten auch Magnetlager, Luftlager oder hydrostatische Lager zur Führung des Läufers eingesetzt werden, allerdings gelten derartig Lagerformen bisher als zu aufwendig für normale industrielle Anwendungen.

Grundsätzlich ist der Einsatz von Gleitlagern bei tubularen Linearmotoren neben den bereits aufgeführten Gründen durchaus sinnvoll. Denn nur Gleitlager sind in der Lage, die oft auftretenden enormen Beschleunigungen von bis zu 300 m/s² zu bewältigen. Lager basierend auf Wälzkörpern, wie zum Beispiel Kugeln, sind für solche Beschleunigungen nicht verwendbar. Der Grund liegt darin, dass die Kugeln bei zu grossen Beschleunigungen zu gleiten beginnen und nicht mehr abrollen. Dadurch kann ein solches Lager sehr schnell zerstört werden.

Die Verwendung eines Gleitlagers erfordert allerdings ein prinzipbedingtes radiales Spiel zwischen dem Lager und dem Läufer. Aufgrund der technischen Ausführung des Läufers als Edelstahlrohr, in welchem die Permanentmagnete und gegebenenfalls noch Abstandshalter zwischen den Permanentmagneten angeordnet sind, muss das Spiel erheblich grösser gewählt werden, als wenn der Läufer eine geschliffene hochpräzise Welle wäre. Dabei ist zu bedenken, dass schon das Rohmaterial in Form eines sehr dünnwandigen Rohres in Bezug auf Rundheit und Geradheit (in Längsrichtung) keinesfalls mit einer geschliffenen Welle verglichen werden kann. Das Einbringen der Permanentmagnete und der Abstandshalter führt weiterhin dazu, dass zusätzliche punktuelle Ausbuchtungen auf der Oberfläche des Läufers entstehen können. Hinzu kommt, dass eine seitliche Belastung des Läufers, wie sie in den meisten Anwendungen vorkommt, eine Biegung des Läufers verursacht. Bezogen auf die Biegebelastung bzw. Biegung ist dabei zu bedenken, dass lediglich das dünnwandige Edelstahlrohr ein Gegenmoment aufbringen kann. Die Säule aus einzelnen Permanentmagneten und Eisenscheiben (Abstandshalter) im Innern des Läufers ist diesbezüglich nicht belastbar. Aufgrund der Biegung des Läufers und des prinzipbedingten Spiels kann sich somit schnell eine Verkeilung des Läufers in den Gleitlagern ergeben. Die Folge davon ist eine höhere Reibung und Abnutzung der Lager, sogar eine komplette Blockade der linearen Bewegung kann die Folge sein. Um dem entgegen zu wirken, muss das Spiel verhältnismässig gross gewählt werden bzw. dürfen die Läufer eines tubularen Linearmotors seitlich nur wenig belastet werden.

Abgesehen davon, dass je nach Einsatzgebiet des Linearmotors ein derartig grosses radiales Spiel nicht akzeptiert werden kann, wirkt sich ein grosses radiales Lagerspiel in zweierlei Hinsicht negativ auf den tubularen Linearmotor aus. Erstens entsteht aufgrund der Lage des Läufers ausserhalb des Zentrums (der Längsachse) eine zunehmende magnetische Anziehungskraft, da sich die radialen Komponenten der magnetischen Anziehungskräfte nicht mehr kompensieren. Ein radiales Spiel im Bereich von wenigen Zehntelmillimetern kann schon wesentliche Anziehungskräfte verursachen, welche die Lager stark belasten, denn der Verschleiss eines Lineargleitlagers ist in erster Näherung proportional dem Produkt aus Geschwindigkeit und Flächenpressung. Zudem beeinflusst die radiale Lageverschiebung die eingesetzte interne Positionssensorik des Linearmotors. Bei einer solchen Positionssensorik werden üblicherweise Hallsensoren verwendet, welche das Feld der Permanentmagnete im Läufer messen. Verändert sich der radiale Abstand zwischen den Hallsensoren und den Permanentmagneten, entstehen entsprechende Messsignalabweichungen, welche zu Fehlern bei der Positionsbestimmung des Linearmotors führen. Es ist leicht zu verstehen, dass während einer dynamischen Bewegung oder generell bei Belastungsänderungen des Läufers sich dessen Lage in Bezug auf das Zentrum (die Längsachse) aufgrund des raidalen Spiels in unvorhersehbarer Weise ständig ändert und damit Messfehler verursacht werden. Bei Verwendung von Hallsensoren in der Positionssensorik wird üblicherweise eine Sinus-Cosinus-Auswertung durchgeführt, wobei die Amplituden der Messsignale, welche in der Positionssensorik erfasst werden, herausdividiert werden. In einer ersten Annäherung ist somit die Positionserfassung unabhängig von der Messsignalstärke. Die Stärke der erfassten Magnetfelder (Messignale) steht in enger Abhängigkeit zu der Distanz zwischen der Positionssensorik und dem Läufer. Das bedeutet, dass die Amplituden der erfassten Signale je nach lagerspielbedingter radialer Position des Läufers unterschiedlich sind. Zu beachten ist dabei, dass bei derartigen lagerspielbedingten Lageveränderungen des Läufers relativ zur Positionssensorik neben der Amplitude auch die Form bzw. Richtung der Feldlinien beeinflusst wird. Dies führt dazu, dass die Messsignale trotz der vorteilhaften Auswertung nach dem Sinus-Cosinus Verfahren verfälscht werden und daraus Positionsfehler entstehen können.

Die Lagerung des Läufers in einem Lineargleitlager mit entsprechendem radialen Lagerspiel führt dazu, dass tubulare Linearmotoren mit einer zusätzlichen Lagerung versehen werden müssen, wenn grosse seitliche Kräfte auftreten oder eine hohe Führungsgenauigkeit erforderlich ist. Diese zusätzliche Lagerung kann ähnlich wie bei Flachlinearmotoren mit Hilfe von Profilschinenführungen realisiert werden, oder man verwendet eine sogenannte Doppelstangenführung in H-Form. Die Verwendung einer zusätzlichen Lagerung hat neben den zusätzlichen Kosten, der grösseren bewegten Masse und dem grösseren Bauvolumen auch den prinzipiellen Nachteil, dass es sich um ein überbestimmtes Lagerungssystem handelt. Dies erfordert in der Praxis aufwendige Ausrichtarbeiten und meist den Einsatz von ausgleichenden Kupplungselementen zwischen dem im Lineargleitlager geführten Läufer und der externen zusätzlichen Lagerung. Eine Möglichkeit, das Problem der überbestimmten Lagerung zu umgehen, besteht darin, dass man auf die interne Lagerung des Läufers komplett verzichtet. Dazu wird der Läufer beidseitig durch die externe Lagerung geführt. Der Durchmesser des Läufers muss dabei entsprechend kleiner sein, damit der Läufer in keinem Betriebsfall den Stator berührt. Gerade bei langen Führungen kann dies aber nicht so einfach sichergestellt werden, da der Läufer eine belastungsabhängige Eigenbiegung aufweist. Entsprechend muss mit einem noch grösseren Messfehler bei der Bestimmung der Läuferposition mit Hilfe der Positionssensorik gerechnet werden. Zudem wird durch den kleineren Durchmesser des Läufers auch die Motorkraft reduziert.

Aus den bisherigen Ausführungen geht somit hervor, dass die bei tubularen Linearmotoren eingesetzte Gleitlagerung sowohl in Bezug auf die mechanische Belastbarkeit als auch in Bezug auf die Führungsgenauigkeit bestimmte technische Grenzen nicht überschreiten kann. Die Verwendung von zusätzlichen Führungssystemen (Zusatzführungen) ermöglicht es zwar, den Einsatzbereich von tubularen Linearmotoren entsprechend zu vergrössern. Dabei muss allerdings akzeptiert werden, dass zusätzlicher technischer Aufwand und somit zusätzliche Kosten entstehen, die bewegten Massen um die Massen der Zusatzführungen erhöht werden, und die gesamte Baugrösse des Linearantriebs wesentlich vergrössert wird. In jedem Fall bleibt die Einschränkung, dass sich der Läufer aufgrund des Lagerspiels nie zentrisch (koaxial) in der Mitte der Statorrohrung befindet und sich damit zusätzliche Lagerbelastungen sowie Positionsabweichungen ergeben.

In der EP-A-1 607 205 ist eine Antriebsvorrichtung für eine Spritzgiessmaschine gezeigt, die einen Linearmotor mit einem Linearkugellager umfasst. Bei der in der EP-A-1 607 205 gezeigten Antriebsvorrichtung sind allerdings die Permanentmagnete nicht (innen) im Läuferrohr (drinnen) angeordnet, sondern aussen auf dem Läuferrohr. Zudem muss dort das Läuferrohr zwingend aus einem magnetischen (magnetisierbaren) Material (z.B. Eisen) bestehen und kann gar nicht aus einem nicht-magnetischen Material bestehen, da das Läuferrohr einen Teil des magnetischen Rückschlusses bildet. Dies ist technisch komplett unvereinbar mit einem Aufbau eines tubularen Linearmotors, bei dem die Antriebswicklungen im Stator und die Permanentmagnete (innen) im Läuferrohr (drinnen) angeordnet sind, welches sich durch das (zentrale) Durchangsloch des Stators erstreckt. Bei einem solchen Linearmotor muss das Läuferrohr zwingend nicht-magnetisch sein, weil ansonsten der Rückschluss des Magnetfeldes der Permanentmagnete über das Läuferrohr erfolgen würde, was zu Inoperabilität führen würde.

Eine Aufgabe der vorliegenden Erfindung besteht daher darin, die vorstehend erläuterten Nachteile zu vermeiden und eine Antriebsvorrichtung mit einem tubularen Linearmotor mit einer belastbaren und hochpräzisen Führung des Läufers bereitzustellen, wobei jedoch die konstruktiven Vorteile eines tubularen Linearmotors nicht beeinträchtigt werden sollen.

Dieses Ziel wird durch die erfindungsgemässe Antriebsvorrichtung, wie sie durch die Merkmale des unabhängigen Patentanspruchs spezifiziert ist, erreicht. Vorteilhafte Aspekte der erfindungsgemässen Antriebsvorrichtung sind Gegenstand der abhängigen Patentansprüche.

Die erfindungsgemässe Antriebsvorrichtung umfasst mindestens einen tubularen Linearmotor, der einen zylindrischen Läufer und einen rohrförmigen Stator mit einem zylinderförmigen magnetischen Rückschluss und einem zum magnetischen Rückschluss koaxialen Durchgangsloch aufweist, wobei im magnetischen Rückschluss elektrische Antriebswicklungen angeordnet sind. Der Läufer weist ein nicht-magnetisches Läuferrohr auf, in welchem Permanentmagnete angeordnet sind, erstreckt sich koaxial durch das Durchgangsloch und ist in seiner Längsrichtung relativ zum Stator beweglich gelagert. Die erfindungsgemässe Antriebsvorrichtung umfasst Linearkugellager, und der Läufer des tubularen Linearmotors ist in diesen Linearkugellagern gelagert. Dies ermöglicht eine hochpräzise Führung des Läufers praktisch ohne radiales Lagerspiel.

Der Läufer des Linearmotors der erfindungsgemässen Antriebsvorrichtung kann dabei als eine hochpräzise Läuferwelle betrachtet werden, welche eine Durchmessertoleranz im Bereich von h7 bis h6 gemäss DIN EN ISO 286 aufweist, und diese hochpräzise Läuferwelle ist in den Linearkugellagern radial quasi spielfrei gelagert und axial durch den Stator des Linearmotors geführt.

Gemäss einem vorteilhaften Aspekt der erfindungsgemässen Antriebsvorrichtung weist der Stator eine Positionssensorik zur Erfassung der Längsposition des Läufers relativ zum Stator auf, und der Läufer ist mit Hilfe der Linearkugellager mit einem festen radialen Abstand zur Positionssensorik geführt. Dadurch werden Positionsmessfehler auf ein Minimum reduziert.

Gemäss einem weiteren vorteilhaften Aspekt der erfindungsgemässen Antriebsvorrichtung ist das Läuferrohr aus oberflächengehärtetem Edelstahl hergestellt, und seine äussere Oberfläche ist geschliffen. Dadurch bildet der Läufer eine hochpräzise Läuferwelle mit einer Oberflächenhärte von vorzugsweise mindestens 900 HV (Vickers-Härte), die für eine Führung in Linearkugellagern besonders geeignet ist.

Gemäss einem weiteren vorteilhaften Aspekt der erfindungsgemässen Antriebsvorrichtung weisen die Linearkugellager Kugeln auf, die aus einem nicht-magnetischem Material hergestellt sind. Dadurch kann der magnetische Läufer in den Linearkugellagern geführt werden, ohne dass magnetische Anziehungskräfte auf die Kugeln der Linearkugellager wirken.

Gemäss einem weiteren vorteilhaften Aspekt der erfindungsgemässen Antriebsvorrichtung sind die Kugeln der Linearkugellager aus einem austenitischen Stahl hergestellt und weisen eine gehärtete Oberfläche auf. Als austenitische Stähle kommen beispielsweise Stähle in Frage mit der Werkstoffbezeichnung nach der Euro-Norm EN10027-2 / nach der Norm AISI des American Iron and Steel Institute 1.4301 / AISI 304 (X5CrNi18-10), 1.4401 / AISI 316 (X5CrNiMo17-12-2), 1.4404 / AISI 316L (X2CrNiMo17-12-2), 1.4571 / AISI 316Ti (X6CrNiMoTi17-12-2), und die Kugeln weisen eine gehärtete Oberfläche auf mit einer Härte (Vickers-Härte) wie sie oben für die Oberflächenhärte des Läuferrohrs spezfiziert ist (mindestens 900 HV). Solche Kugeln ermöglichen eine sehr genaue und beständige Lagerung des Läufers, und - da diese Stähle nicht-magnetisch sind - wirken keine magnetischen Anziehungskräfte auf die Kugeln der Linearkugellager.

Alternativ sind gemäss einem weiteren vorteilhaften Aspekt der erfindungsgemässen Antriebsvorrichtung die Kugeln der Linearkugellager aus einem Hochleistungskunststoff wie PEEK (Polyetheretherketon) oder PPS (Polyphenylensulfid) hergestellt. Prinzipiell müssen die in Frage kommenden Hochleistungskunststoffe für die Anwendung in den Linearkuggellagern ausreichend hart sein (Tragfähigkeit), dürfen praktisch keine Flüssigkeitsaufnahme zulassen (Korrosionsbeständigkeit) und müssen temperaturfest sein (Erwärmung im Betrieb). Deartige Kugeln eignen sich ebenfalls für eine präzise Lagerung des Läufers und müssen entweder wenig oder gar nicht geschmiert werden, je nachdem, ob ihnen bei der Herstellung bereits Schmierstoffe zugesetzt werden. Sie lassen sich zudem sehr gut reinigen.

Gemäss einem weiteren vorteilhaften Aspekt der erfindungsgemässen Antriebsvorrichtung weisen die Linearkugellager Laufbahnbleche auf, die aus einem nicht-magnetischen Material hergestellt sind. Insbesondere sind diese Laufbahnbleche gemäss einem weiteren vorteilhaften Aspekt aus austenitischem Stahl hergestellt weisen eine gehärtete Oberfläche auf. Als austenitische Stähle kommen beispielsweise Stähle in Frage mit der Werkstoffbezeichnung nach der Euro-Norm EN10027-2 / nach der Norm AISI des American Iron and Steel Institute 1.4301 / AISI 304 (X5CrNi18-10), 1.4401 / AISI 316 (X5CrNiMo17-12-2), 1.4404 / AISI 316L (X2CrNiMo17-12-2), 1.4571 / AISI 316Ti (X6CrNiMoTi17-12-2), und die Laufbahnbleche weisen eine gehärtete Oberfläche mit einer Oberflächenhärte (Vickers-Härte) von mindestens 900 HVauf.

Gemäss einem weiteren vorteilhaften Aspekt der erfindungsgemässen Antriebsvorrichtung sind die Linerakugellager im Stator oder in Längsrichtung vor und hinter dem Stator angeordnet. Das heisst, die Linerakugellager sind nicht Bestandteil des Stators, können aber beispielsweise an den jeweiligen Längsenden des Stators befestigt sein.

Gemäss einem weiteren vorteilhaften Aspekt der erfindungsgemässen Antriebsvorrichtung weist diese eine Zusatzführung auf mit einer zum Läufer des tubularen Linearmotors parallelen Führungsstange, die in zusätzlichen (von den Linearkugellagern für den Läufer separaten) Linearkugellagern längsbeweglich gelagert ist und mit dem Läufer kinematisch gekoppelt ist. Dies verbessert die Führungsgenauigkeit noch weiter und wirkt insbesondere als Verdrehsicherung.

Gemäss einem weiteren vorteilhaften Aspekt der erfindungsgemässen Antriebsvorrichtung weist diese zwei parallel angeordnete tubulare Linearmotoren auf, wobei die Läufer der zwei parallel angeordneten tubularen Linearmotoren kinematisch miteinander gekoppelt sind. Dadurch kann bei einem Bauvolumen, welches gleich gross ist wie dasjenige der Ausführung mit Zusatzführung, die doppelte Antriebskraft erreicht werden.

Gemäss einem weiteren vorteilhaften Aspekt der erfindungsgemässen Antriebsvorrichtung umfasst die Antriebsvorrichtung zwei parallel angeordnete tubulare Linearmotoren auf, wobei die Läufer der zwei parallel angeordneten tubularen Linearmotoren kinematisch miteinander gekoppelt sind. Allerdings weist nur einer der zwei parallel angeordenten tubularen Linearmotoren eine Positionssensorik zur Erfassung der Position seines Läufers relativ zu seinem Stator auf. Die Antriebswicklungen der zwei tubularen Linearmotoren sind dabei parallel oder in Serie geschaltet und von einer einzigen Steuerung bestrombar. Dadurch ergibt sich eine deutliche Reduktion des technischen Aufwands und somit eine Kosteneinsparung.

Gemäss einem weiteren vorteilhaften Aspekt der erfindungsgemässen Antriebsvorrichtung weist diese zwei kollinear angeordnete tubulare Linearmotoren auf, wobei die Läufer der zwei kollinear angeordenten tubularen Linearmotoren über gelenkig verbundene Schwenkarme kinematisch mit einer Aktuatorplatte gekoppelt sind.

Gemäss einem weiteren vorteilhaften Aspekt der erfindungsgemässen Antriebsvorrichtung weist diese zwei parallel angeordnete tubulare Linearmotoren auf, wobei die Läufer der zwei parallel angeordenten tubularen Linearmotoren über gelenkig verbundene Schwenkarme kinematisch mit einer Aktuatorplatte gekoppelt sind. Solche Ausführungsformen sind besonders für parallelkinematische Anwendungen konfiguriert, wobei keine zusätzlichen Führungen erforderlich sind.

Gemäss einem weiteren vorteilhaften Aspekt der erfindungsgemässen Antriebsvorrichtung ist entweder ein Teil der Kugeln oder alle Kugeln der Linearkugellager oder der zusätzlichen Linearkugellager selbstschmierend, indem sie aus einem Hochleistungskunststoff, insbesondere aus PEEK oder PPS unter Zusatz von Festschmierstoffen (wie beispielsweise Graphit oder Polytetrafluorethylen) hergestellt sind. Solche Kugeln müssen nicht geschmiert werden und können auch gereinigt werden, ohne dass anschliessend eine Nachfettung (Nachschmierung) erforderlich ist. Prinzipiell ist auch denkbar, dass ein Teil der Kugeln des Linearkugellagers aus austenitischem Stahl hergestellt sind und andere Kugeln des gleichen Linearkugellagers die genannten selbstschmierenden Kugeln sind, sodass die Schmierung des Linearkugellagers insgesamt von den selbstschmierenden Kugeln übernommen wird. Beispielsweise können in einem solche Linearkugellager die Kugeln so angeordnet sein, dass in abwechselnder Reihenfolge immer Kugeln aus austenitischem Stahl und selbstschmierende Kugeln aufeinanderfolgend angeordnet sind. Aber auch andere Reihenfolgen sind möglich.

Weitere vorteilhafte Aspekte der erfindungsgemässen Antriebsvorrichtung ergeben sich aus der nachfolgenden Beschreibung von Ausführungsbeispielen der erfindungsgemässen Antriebsvorrichtung mit Hilfe der Zeichnung.

Es zeigen:
- Fig. 1: eine vereinfachte perspektivische Ansicht eines Ausführungsbeispiels eines tubularen Linearmotors einer erfindungsgemässen Antriebsvorrichtung;
- Fig. 2: einen Axialschnitt des tubularen Linearmotors aus Fig. 1;
- Fig. 3: einen Axialschnitt einer Variante des tubularen Linearmotors einer erfindungsgemässen Antriebsvorrichtung;
- Fig. 4: einen Ausschnitt eines Läufers eines tubularen Linearmotors mit zeichnerisch übertrieben dargestellten Ausbuchtungen des Läuferrohrs;
- Fig. 5: eine perspektivische Ansicht eines Linearkugellagers;
- Fig. 6: eine schematische Darstellung eines Ausführungsbeispiels der erfindungsgemässen Antriebsvorrichtung mit einem tubularen Linearmotor als Teil einer H-Führung;
- Fig. 7: eine schematische Darstellung eines Ausführungsbeispiels einer erfindungsgemässen Antriebsvorrichtung in Form einer H-Führung, mit zwei tubularen Linearmotoren, wobei jeder Linearmotor eine eigene Steuerung aufweist;
- Fig. 8: eine schematische Darstellung eines weiteren Ausführungsbeispiels einer erfindungsgemässen Antriebsvorrichtung in Form einer H-Führung, mit einem tubularen Linearmotor und einem dazu parallel geschalteten vereinfachten Linearmotor, wobei nur ein Linearmotor eine Steuerung aufweist;
- Fig. 9: eine schematische Darstellung eines weiteren Ausführungsbeispiels einer erfindungsgemässen Antriebsvorrichtung mit zwei tubularen Linearmotoren in einer einfachen parallelkinematischen Konfiguration; und
- Fig. 10: eine Darstellung eines weiteren Ausführungsbeispiels einer erfindungsgemässen Antriebsvorrichtung mit zwei tubularen Linearmotoren in einer anderen einfachen parallelkinematischen Konfiguration.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen. Unter dem Stator ist derjenige Motorteil zu verstehen, in dessen magnetischem Rückschluss elektrische Antriebswicklungen angeordnet sind und der diese elektrischen Antriebswicklungen trägt. Entsprechend ist unter dem Läufer derjenige Motorteil zu verstehen, in welchem Permanentmagnete angeordnet sind. Dabei spielt es grundsätzlich keine Rolle, ob der Stator oder der Läufer im praktischen Einsatz des Linearmotors als ortsfest angenommen wird.

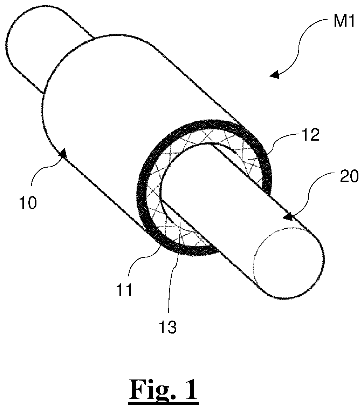

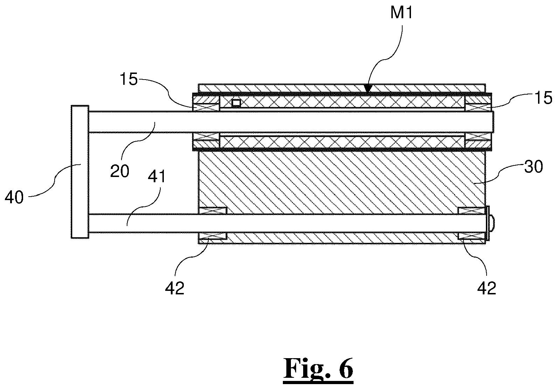

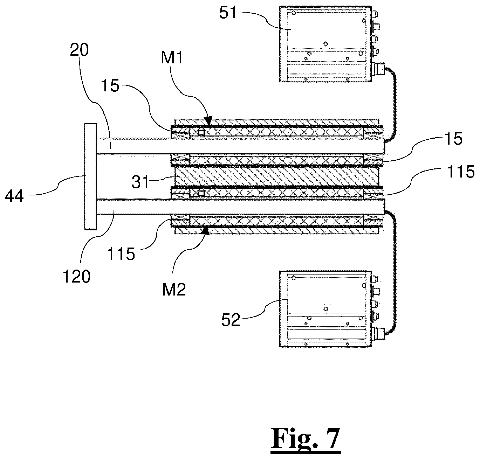

In den Figuren 1-3 sowie in Figur 6 sind Ausführungsbeispiele der erfindungsgemässen Antriebsvorrichtung dargestellt, die jeweils nur einen einzigen tubularen Linearmotor umfassen. Die Figuren 7-10 zeigen Ausführungsbeispiele mit zwei tubularen Linearmotoren. Selbstverständlich kann die erfindungsgemässe Antriebsvorrichtung auch mehr als zwei tubulare Linearmotoren aufweisen.

**Fig. 1** zeigt eine vereinfachte perspektivische Ansicht eines tubularen Linearmotors M1 einer erfindungsgemässen Antriebsvorrichtung mit einem rohrförmigen Stator 10 und einem permanentmagnetisch erregten Läufer 20. Der Stator 10 umfasst einen zylinderförmigen Rückschluss 11 aus Eisen, in welchem Antriebswicklungen 12 angeordnet sind, die von einer (hier nicht dargestellten) Steuerung bestromt werden können. Der Läufer 20 erstreckt sich durch ein Durchgangsloch 13 im Stator 10 hindurch und ist in diesem (mittels interner oder externer Lager) in Längsrichtung beweglich gelagert.

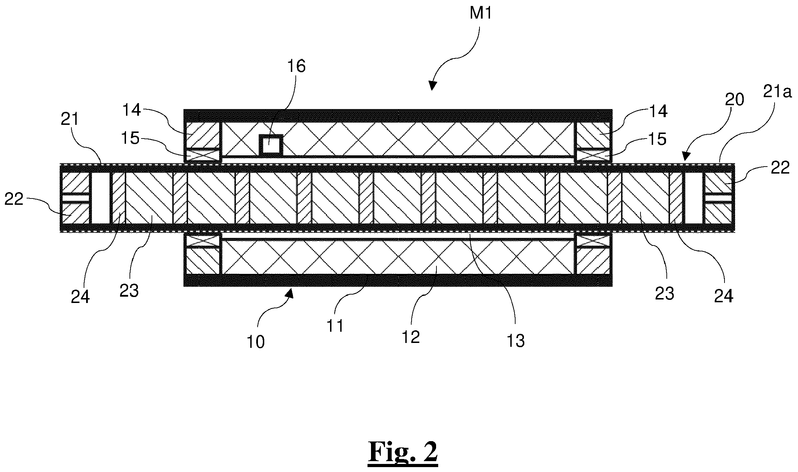

**Fig. 2** zeigt einen Axialschnitt des tubularen Linearmotors M1 aus Fig. 1. Der Stator 10 ist an beiden Längsenden mittels je einer ringförmigen Abschlusswand 14 abgeschlossen. In den beiden ringförmigen Abschlusswänden 14 ist je ein Linearkugellager 15 befestigt, auf dessen Ausbildung weiter unten näher eingegangen wird. Ferner ist schematisch eine Sensorik 16 zur Positionserfassung des Läufers 20 relativ zum Stator 10 dargestellt.

Der Läufer 20 umfasst ein umhüllendes Läuferrohr 21 aus einem austenitischen und folglich nicht ferromagnetischen Stahl, beispielsweise aus einem Stahl mit der Werkstoffbezeichnung nach der Euro-Norm EN10027-2 / nach der Norm AISI des American Iron and Steel Institute 1.4301 / AISI 304 (X5CrNi18-10), 1.4401 / AISI 316 (X5CrNiMo17-12-2), 1.4404 / AISI 316L (X2CrNiMo17-12-2), 1.4571 / AISI 316Ti (X6CrNiMoTi17-12-2). Das Läuferrohr 21 ist an seinen beiden Längsenden mit Endteilen 22 abgeschlossen, und weist eine gehärtete Oberfläche 21a (gestrichelt angedeutet) auf. Innerhalb des Läuferrohrs 21 sind abwechselnd Permanentmagnete 23 und Eisenscheiben oder Abstandshalter 24 angeordnet. Die Verwendung von magnetischem Stahl für das Läuferrohr 21 würde einem magnetischen Kurzschluss der Permanentmagnete 23 gleichkommen und ist somit nicht geeignet. Das Läuferrohr 21 selbst ist ein Präzisionsstahlrohr und weist sowohl einen hochpräzisen Innendurchmesser als auch einen hochpräzisen Aussendurchmesser auf (Durchmessertoleranz im Bereich von h7 bis h6 gemäss DIN EN ISO 286). Da die Permanentmagnete 23 und die Eisenscheiben 24 oder Abstandhalter beim Zusammenbau des Läufers 20 in das Läuferrohr 21 eingeschoben werden müssen, muss der Durchmesser der Permanentmagnete 23 und der Eisenscheiben oder Abstandshalter 24 kleiner sein als der Innendurchmesser des Läuferrohres 21. Dabei muss sichergestellt sein, dass bei allen Toleranzen noch ein leichtes Einschieben der Permanentmagnete und Eisenscheiben bzw. Abstandshalter 24 in das Läuferrohr 21 hinein möglich ist. Gleichwohl kann das Einschieben aufgrund der Reibung und gegebenenfalls aufgrund von Verkanten der Teile zu einer Belastung des Läuferrohres 21 führen.

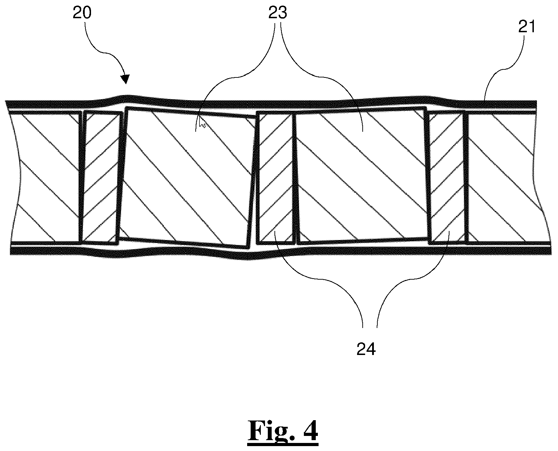

Wie in **Fig. 4** übertrieben gezeigt, kann dies bei konventionellen dünnwandigen Läuferrohren (Wandstärke typischerweise 0.5 mm) zu Ausbuchtungen des Läuferrohres führen, welche im Bereich von einigen hundertstel Millimetern liegen können. Ein Nachschleifen der dünnwandigen fertigen Läufer führt dann zwar zu einer Verbesserung in dem Sinne, dass diese Ausbuchtungen eingeebnet werden. Ein echtes Rundschleifen des Läufers auf ein enges Toleranzfenster (wie der oben genannte Toleranzberich von h7-h6) ist aber insbesondere wegen der geringen Wanddicke eines konventionellen Läuferrohrs nicht möglich. Dies trifft sowohl für ein mit Permanentmagneten 23 und Eisenscheiben oder Abstandshaltern 24 gefülltes konventionelles Läuferrohr 21 zu als auch für ein ungefülltes konventionelles Läuferrohr 21. Zur Erreichung der hohen Präzision von Innen- und Aussendurchmesser des Läuferrohrs der erfindungsgemässen Antriebsvorrichtung wird daher der Läufer der erfindungsgemässen Antriebsvorrichtung auf eine besondere Art und Weise hergestellt, die weiter unten noch erläutert wird.

Die Linearkugellager 15 der erfindungsgemässen Antriebsvorrichtung sind nahezu spielfrei ausgebildet und lagern bzw. führen den Läufer 20 zentrisch (genau auf der Längsachse/Symmetrieachse). Damit ist der Hauptgrund der eingangs erwähnten Messsignalverfälschung bei der Bestimmung der Läuferposition ursächlich bekämpft. Die sehr genaue zentrische Führung bzw. Lage des Läufers 20 reduziert die Lagerbelastung durch magnetische Anziehungskräfte weitgehend und ermöglicht aufgrund der genau definierten Lage des Läufers 20 eine einfache Verbindung zu anderen mechanischen Komponenten.

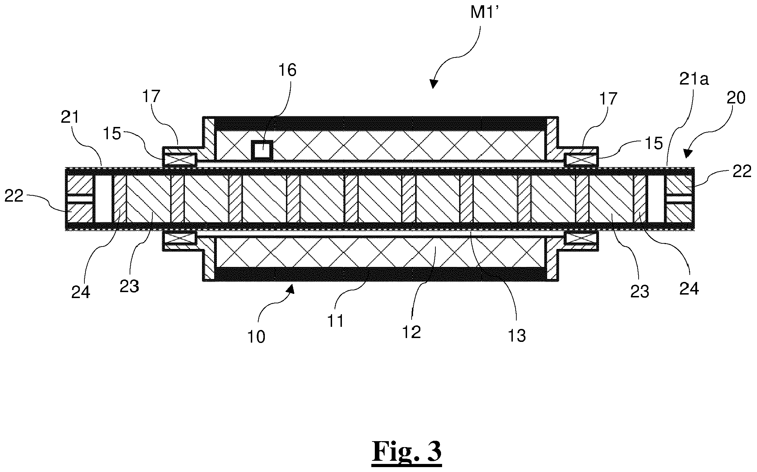

**Fig. 3** zeigt einen Axialschnitt einer Variante eines tubularen Linearmotors M1' der erfindungsgemässen Antriebsvorrichtung. Gegenüber der in Fig. 2 gezeigten Variante besteht der Unterschied darin, dass die Linearkugellager 15 in Flanschen 17 angeordnet sind, die am Stator 10 befestigt sind, sodass die Linearkugellager ausserhalb des Stators 10 (in Längsrichtung betrachtet vor und hinter dem Stator 10) angeordnet sind.

Im Gegensatz zu einer Anordnung mit Gleitlagern, welche prinzipbedingt ein Lagerspiel aufweisen, ist der in den Linearkugellagern 15 gelagerte Läufer 20 radial nahezu spielfrei angeordnet und befindet sich genau in der Mitte des Durchgangslochs 13. Damit entfällt der nicht korrigierbare Fehler bei der Positionserfassung durch die Hallsensoren, der aus einer radialen Verschiebung des Läufers resultiert (nicht zentrische Anordnung des Läufers). Dies ist umso bedeutender, als insbesondere Lastwechsel eine derartige radiale Verschiebung des Läufers im Rahmen des Lagerspieles verursachen und damit gerade dann ein Fehler bei der Positionserfassung entsteht, wenn der Positionsregler maximal aussteuern muss.

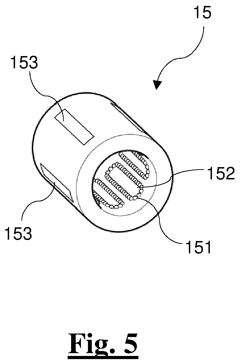

**Fig. 5** zeigt den schematischen Aufbau eines (bekannten und kommerziell erhältlichen) Linearkugellagers 15. Die Kugeln 151 des Linearkugellagers 15 führen bei einer linearen Bewegung einer im Linearkugellager geführten Welle eine 'Kreisbewegung' in geschlossenen ovalen Umlaufbahnen 152 aus. Die Kugeln 151 sind dabei nur auf einer der beiden Längsbahnen der jeweiligen ovalen Umlaufbahn 152 durch Laufbahnbleche 153 abgestützt. Das heisst, die eigentliche Lagerfunktion findet nur dort statt, wo die Kugeln durch die Laufbahnbleche 153 abgestützt werden. In allen anderen Teilbereichen der jeweiligen ovalen Umlaufbahnen nehmen die Kugeln 151 keine Kräfte auf und bewegen sich in diesem Sinne belastungsfrei entlang der jeweiligen ovalen Umlaufbahn.

Wird eine in einem solchen konventionellen Linearkugellager gelagerte Welle zu schnell beschleunigt, besteht die erhebliche Gefahr, dass die Kugeln nicht gleich zu rollen beginnen, sondern auf der äusseren Oberfläche der Welle bzw. auf den Laufbahnblechen 153 gleiten und diese so beschädigen, weshalb Linearkugellager bei tubularen Linearmotoren bisher nicht zum Einsatz kommen. Ausserdem findet bei Linearkugellagern eine punktuelle Lagerbelastung statt.

Aus diesem Grund weist bei der erfindungsgemässen Antriebsvorrichtung die äussere Oberfläche 21a des Läuferrohrs 21 des tubularen Linearmotors eine ausreichende Oberflächenhärte auf (mindestens 900 HV Vickers-Härte), da ansonsten Laufrillen oder Eindrücke durch die Kugeln 151 entstehen können. Beispielsweise ist das Läuferrohr 21 aus einem oberflächengehärteten Stahl hergestellt und gehärtet. Dies gilt gleichermassen für die Kugeln 151 und die Laufbahnbleche 153 des Linearkugellagers 15.

Ausserdem werden bei konventionellen 'rostfreien' Linearkugellagern auch sonst noch gewisse Kompromisse eingegangen, wenn für diese Stahl der Werkstoffe 1.40xx oder 1.41xx (Werkstoffbezeichnung nach der Euro-Norm EN10027-2) eingesetzt wird, wobei die Bezeichung 'rostfrei' oder 'niro' (für nicht rostend) ohnehin irreführend ist. Denn diese Materialien weisen keinesfalls eine genügende Korrosionsbeständigkeit gegenüber aggressiven Reinigungsmitteln auf, wie sie unter anderem in der Lebensmittelindustrie eingesetzt werden. Zudem ist das Eisen bei diesen Stahlsorten ferromagnetisch, so dass es von Magnetfeldern angezogen wird und damit für eine Anwendung bei tubularen Linearmotoren aus den bereits genannten Gründen ausscheidet.

Würde man nämlich den permanentmagnetisch erregten Läufer 20 eines tubularen Linearmotors zusammen mit einem solchen konventionellen Linearkugellager verwenden, würde die Linearbewegung des Läufers 20 praktisch blockiert werden. Die magnetischen Anziehungskräfte durch die Permanentmagnete 23 im Läufer 20 wären derart gross, dass die Kugeln 151 des Linearkugellagers 15 am Rollen gehindert würden und somit wie eine Bremse wirken würden. Zudem würde jede lineare Verschiebung des Läufers, wenn sie denn mit entsprechendem Kraftaufwand überhaupt möglich wäre, ein magnetisches Einrasten verursachen, da die ferromagnetischen Laufbahnbleche 153 wie ein magnetischer Rückschluss wirken würden und so auf die Polteilung der Permanentmagnete im Läufer reagieren würden.

Wie bereits weiter oben gesagt, basiert die korrekte Funktionsweise eines Linearkugellagers unter anderem darauf, dass die gelagerte Welle (bei der vorliegenden erfindungsgemässen Antriebsvorrichtung: das Läuferrohr 21) sehr präzise gefertigt ist. Insbesondere muss der Durchmesser und die Rundheit über die gesamte Länge der Welle sehr enge Toleranzen aufweisen. Üblicherweise werden hier Toleranzen der Welle im Bereich der Genauigkeitsklasse h7-h6 gefordert. Läufer für herkömmliche tubulare Linearmotoren mit Gleitlagern umfassen typischerweise ein dünnwandiges Chromstahlrohr (Wanddicke etwa 0.5 mm) und Permanentmagnete, die innen in diesem Chromstahlrohr angeordnet sind. Der Aussendurchmesser des Rohres ist relativ ungenau (Durchmesser 20 mm ±0.05 mm, uneben, unrund) und die Oberfläche ist weich. Das stellt bei Gleitlagern aufgrund des prinzipbedingten radialen Lagerspiels kein Problem dar. Solche Läufer können allerdings nicht in Linearkugellagern gelagert werden, da einerseits ihre Genauigkeit zu gering ist und die Oberfläche zu weich ist, und andererseits die Läufer magnetisch sind und die Kugeln der Linearkugellager bei Vewerndung von Stahl der Werkstoffe 1.40xx oder 1.41xx (Werkstoffbezeichnung nach der Euro-Norm EN10027-2) dadurch angezogen würden. Die Läufer herkömmlicher tubularer Linearmotoren sind daher für die Führung in Linearkugellagern nicht geeignet.

Daher wird als Material für den Läufer 20 des tubularen Linearmotors der erfindungsmässen Antriebsvorrichtung ein nicht-magnetisches Material, insbesondere nicht-magnetischer obeflächengehärteter Edelstahl verwendet, vorzugsweise ein austenitischer Stahl, beispielsweise ein Stahl mit der Werkstoffbezeichnung nach der Euro-Norm EN10027-2 / nach der Norm AISI des American Iron and Steel Institute 1.4301 / AISI 304 (X5CrNi18-10), 1.4401 / AISI 316 (X5CrNiMo17-12-2), 1.4404 / AISI 316L (X2CrNiMo17-12-2), 1.4571 / AISI 316Ti (X6CrNiMoTi17-12-2). Aus diesem Material wird (z.B. für ein Läuferrohr mit einem Aussendurchmesser von 20 mm) ein dickwandiges Rohr (Wandstärke z.B. 1 mm) mit zunächst leichtem Übermass (z.B. einige Zehntel Millimeter Übermass) des Aussendurchmessers, jedoch mit hochpräzisem Innendurchmesser gefertigt (Toleranzklasse h7-h6) gefertigt. Der Innendurchmesser entspricht genau demjenigen Mass, welches für das Einschieben der Permanentmagnete 23 und der Eisenscheiben oder Abstandshalter 24 benötigt wird (z.B. 16 mm bei einer Wandstärke von 1 mm). Das Aussenmass des dickwandigen Rohrs kann noch relativ ungenau sein und muss lediglich das für den anschliessenden Schleifprozess benötigte Übermass garantieren. Dadurch, dass für das Aussenmass eine grobe Toleranz im Bereich von einigen Zehntelmillimeter ausreicht, kann der Herstellungsprozess des dickwandigen Rohrs vorteilhafterweise im Hinblick auf die erforderliche kleine Toleranz beim Innendurchmesser optimiert werden. Das dickwandige Rohr wird anschliessend auf das gewünschte Aussenmass im Toleranzbereich h7-h6 des Läuferrohrs 21 heruntergeschliffen. Um eine genügende Härte gegenüber den Kugeln 151 der Linearkugellager 15 aufzuweisen, wird die äussere Oberfläche des fertig geschliffenen Läuferrohrs 21 anschliessend mit einem geeigneten Prozess oberflächengehärtet. Diese gehärtete äussere Oberfläche 21a des Läuferrohrs 21 erkennt man in Fig. 2 und Fig. 3 (gestrichelte Darstellung). Für die Oberflächenhärtung eignen sich zum Beispiel Verfahren der Randaufstickung (Nitrocarburierverfahren), mit denen eine Oberfläche mit Vickers-Härten von über 900 HV erreicht werden kann. Bei der Wahl der (End-)Wandstärke des Läufers der erfindungsgemässen Antriebsvorrichtung ist sowohl die Eignung für den Schleifprozess, aber auch die gewünschte Biegestifigkeit des Läufers (und zwar unter Berücksichtigung der bei der Anwendung auftretenden Belastung) und natürlich die nach wie vor gewünschte hohe Antriebskraft zu berücksichtigen.

Im Unterschied zu dem Läufer 20 bzw. dem Läuferrohr 21 des tubularen Linearmotors der erfindungsgemässen Antriebsvorrichtung ist der Läufer bzw. das Läuferrohr von herkömmlichen tubularen Linearmotoren üblicherweise lediglich hinsichtlich des Magnetkreises optimiert. Bei der Antriebsvorrichtung gemäss der Erfindung ist der Läufer 20 des tubularen Linearmotors dagegen zusätzlich noch hinsichtlich der Herstellung und der resultierenden Biegesteifigkeit optimiert. Bei der Herstellung spielt der Schleifprozess eine wichtige Rolle. Ein von Anfang an zu dünnwandiges Rohr kann nicht genau rund geschliffen werden, da es den mechanischen Druck des Schleifprozesses und die dabei entstehende Wärme nicht schadlos aufnehmen kann. Ebenso wird ein Rohr mit einer zu geringen Biegesteifigkeit unter Belastung die für Linearkugellager geforderte Geradheit (in Längsrichtung) verlieren bzw. zu stark gebogen werden. Dabei muss natürlich die gewünschte Länge des aus dem Stator herausragenden Teiles des Läufers und der Belastungsfall am Ende des Läufers mit eingerechnet werden. Aus magnetischer Sicht ist hingegen nach wie vor ein möglichst dünnwandiges Rohr anzustreben, damit sich ein kleiner magnetischer Widerstand ergibt bzw. die Permanentmagnete möglichst nahe zu den Wicklungen im Stator kommen (Antriebskraft).

Um nun einen derartigen Läufer 20 in Linearkugellagern 15 zu lagern, sind die Kugeln 151 des Linearkugellagers 15 aus einem nicht-magnetischem Material hergestellt. Dasselbe gilt für die Laufbahnbleche 153 und allfällige weitere Komponenten, welche im Linearkugellager eingesetzt sind. Beispielsweise können die Kugeln 151 und die Laufbahnbleche 153 aus einem nicht-magnetischen und vorzugsweise obeflächengehärteten Edelstahl hergestellt sein, wie z.B. aus einem austenitischen Stahl, beispielsweise ein Stahl mit der Werkstoffbezeichnung nach der Euro-Norm EN10027-2 / nach der Norm AISI des American Iron and Steel Institute 1.4301 / AISI 304 (X5CrNi18-10), 1.4401 / AISI 316 (X5CrNiMo17-12-2), 1.4404 / AISI 316L (X2CrNiMo17-12-2), 1.4571 / AISI 316Ti (X6CrNiMoTi17-12-2).

Alternativ können die Kugeln 151 können auch aus einem Hochleistungskunststoff wie PEEK (Polyetheretherketon) oder PPS (Polyphenylensulfid) hergestellt sein. Insbesondere können solche Kugeln 151 aus einem Hochleistungskunststoff unter Zusatz von Festschmierstoffen (wie beispielsweise Graphit oder Polytetrafluorethylen) hergestellt und somit selbstschmierend sein. Solche Kugeln müssen nicht geschmiert werden. Mit derartigen Kugeln ausgestattete Linearkugellager können beliebig gereinigt werden, ohne dass sie nachfolgend nachgefettet werden müssen. Ein weiterer Vorteil selbstschmierender Kunststoffkugeln in Linearkugellagern für den Einsatz mit tubularen Linearmotoren besteht darin, dass sie im Bereich von grenzwertigen Beschleunigungen ein verbessertes Verhalten haben. Wie bereits erläutert, haben konventionelle Linearkugellager eine Limitierung dahingehend, dass die Kugeln des Linearkugellagers abrollen müssen und nicht zu gleiten beginnen dürfen. Bei einer zu grossen Beschleunigung erfolgt ansonsten eine Beschädigung der Kontaktfläche zwischen Metallkugeln und geführtem Läuferrohr. Bei selbstschmierenden Kunststoffkugeln tritt zwar im Grenzbereich prinzipiell derselbe Effekt (Gleiten der Kugeln statt Abrollen) auf, wobei jedoch im Falle des Gleitens aufgrund der Selbstschmiereigenschaften der Kugeln in erster Näherung ein (Kunststoff-) Gleitlager entsteht und die Gefahr einer Beschädigung von Kugeln und Läuferrohr bedeutend kleiner ist. Auch Linerakugellager mit Kombinationen aus Edelstahlkugeln und derartigen Kunststoffkugeln sind grundsätzlich denkbar, wobei die Reihenfolge der Kugelart abwechselnd sein kann, aber auch davon abweichen kann.

Bei der erfindungsgemässen Antriebsvorrichtung mit tubularen Linearmotor und Linearkugellagern kann der Läufer bedeutend höhere seitliche Kräfte aufnehmen als der Läufer eines herkömmlichen tubularen Linearmotors mit Gleitlager. In vielen Fällen kann daher auf eine Zusatzführung verzichtet werden.

**In** **Fig. 6** ist schematisch ein Ausführungsbeispiel der erfindungsgemässen Antriebsvorrichtung mit einem tubularer Linearmotor M1 mit einer Zusatzführung dargestellt. Der tubulare Linearmotor M1 ist in einen Rahmen 30 eingebaut und sein Läufer 20 ist in Linearkugellagern 15 geführt. Im Rahmen 30 sind zwei zusätzliche Linearkugellager 42 angeordnet (die separat von den Linearkugellagern 15 für den Läufer 20 des Linearmotors sind), in denen eine Führungsstange 41 längsbeweglich geführt ist. Die Führungsstange 41 und der Läufer 20 sind über eine Frontplatte 40 miteinander verbunden (kinematische Kopplung). Eine Ausgleichskupplung, wie sie bei herkömmlichen Antriebsvorrichtungen mit in Lineargleitlagern geführtem Läufer des tubularen Linearmotors erforderlich ist, entfällt hier, wodurch die Montage sehr viel einfacher wird.

**Fig. 7** zeigt ein weiteres Ausführungsbeispiel der erfindungsgemässen Antriebsvorrichtung mit zwei in einem Rahmen 31 eingebauten, gleichartigen tubularen Linearmotoren M1 und M2, deren Läufer 20 bzw. 120 in Linearkugellagern 15 bzw. 115 gelagert sind. Die beiden Läufer 20 und 120 sind über eine Frontplatte 44 miteinander verbunden (kinematisch gekoppelt). Dieses Ausführungsbeispiel weist eine Ähnlichkeit mit demjenigen aus Fig. 6 auf, jedoch ist die Führungsstange 41 des Ausführungsbeispiels aus Fig. 6 mit zugehöriger Lagerung durch den zweiten tubularen Linearmotor M2 ersetzt. Dies ist möglich, da der Läufer 120 vergleichbare Eigenschaften wie die Führungsstange 41 hat und ebenfalls in Linearkugellagern 115 geführt wird. Entsprechend wird die bewegte Masse reduziert und der Aufbau der Führung wesentlich einfacher. Ferner kann damit bei gleicher Baugrösse die doppelte Antriebskraft im Vergleich zum Ausführungsbeispiel aus Fig. 6 erzielt werden. Weiterhin sind bei dem Ausführungsbeispiel in Fig. 7 zwei Steuerungen 51, 52 (z.B. Servoregler) vorgesehen, jeweils eine zur Ansteuerung (Bestromung) von einem der beiden tubularen Linearmotoren M1 und M2.

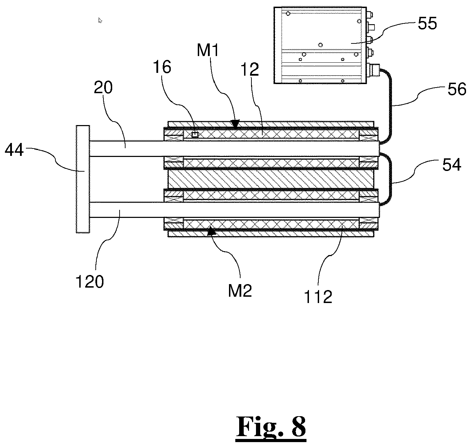

**Fig. 8** zeigt ein weiteres Ausführungsbeispiel der erfindungsgemässen Antriebsvorrichtung mit zwei tubularen Linearmotoren. M1 und M2 in Form einer H-Führung. Dieses Ausführungsbeipsiel ist ähnlich dem Ausführungsbeispiel aus Fig. 7, allerdings umfasst im Unterschied zu dem Ausführungsbeispiel aus Fig. 7 der zweite tubulare Linearmotor M2 keine Positionssensorik 16, sein Stator umfasst lediglich Wicklungen, einen Eisenrückschluss und Linearkugellager. Aufgrund der parallelen Anordnung der beiden Linearmotoren M1 und M2 können die Antriebswicklungen 112 des Linearmotors M2 mit einem Verbindungskabel 54 parallel oder in Serie zu den Antriebswicklungen 12 des erstens Linearmotors M1 geschaltet sein. Aus Sicht der Ansteuerung (Bestromung der Antriebswicklungen) ist dies eine Lösung, welche quasi nur aus einem einzigen Linearmotor besteht, dessen Antriebswicklungen auf zwei Statoren verteilt sind. Entsprechend wird nur eine einzige Steuerung 55 (z.B. Servoregler) und nur ein Verbindungskabel 56 für die Ansteuerung benötigt, was den technischen Aufwand und damit die Kosten deutlich reduziert.

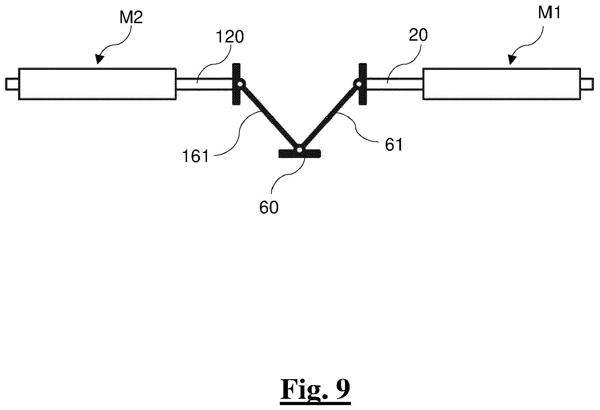

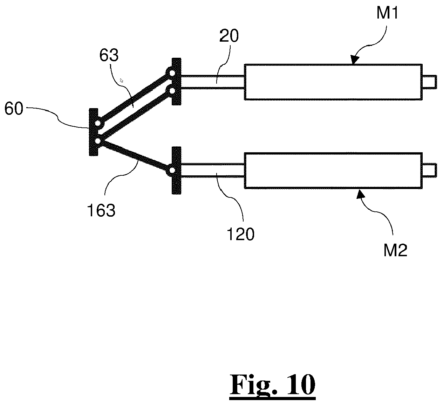

In Fig. 9 und Fig. 10 sind zwei weitere Ausführungsbeispiele der erfindungsgemässen Antriebsvorrichtung dargestellt, bei der jeweils zwei tubulare Linearmotoren M1 und M2 mit Linearkugellagern für eine parallelkinematische Anwendung konfiguriert sind, wobei keine zusätzlichen Führungen erforderlich sind.

**In** **Fig. 9** sind die beiden Linearmotoren M1 und M2 kollinear angeordnet und ihre Läufer 20, 120 wirken über gelenkig verbundene Schwenkarme 61, 161 auf eine Aktuatorplatte 60. **In** **Fig. 10** sind die beiden Linearmotoren M1 und M2 parallel zu einander angeordnet und ihre Läufer 20, 120 wirken über gelenkig verbundene Schwenkarme 63, 163 auf eine Aktuatorplatte 60. In analoger Weise können auch alle Formen von sogenannten Hexapods realisiert werden.

## Patentansprüche

1. Antriebsvorrichtung mit mindestens einem tubularen Linearmotor (M1; Ml'; M2), der einen zylindrischen Läufer (20; 120) und einen rohrförmigen Stator (10) mit einem zylinderförmigen magnetischen Rückschluss (11) und einem zum magnetischen Rückschluss (11) koaxialen Durchgangsloch (13) aufweist, wobei im magnetischen Rückschluss (11) elektrische Antriebswicklungen (12; 112) angeordnet sind, wobei der Läufer (20; 120) ein nicht-magnetisches Läuferrohr (21) aufweist, in welchem Permanentmagnete (23) angeordnet sind, und wobei sich der Läufer (20; 120) koaxial durch das Durchgangsloch (13) erstreckt und in seiner Längsrichtung relativ zum Stator (10) beweglich gelagert ist, **dadurch gekennzeichnet, dass** die Antriebsvorrichtung Linearkugellager (15; 115) umfasst und der Läufer (20; 120) des tubularen Linearmotors (M1; Ml'; M2) in den Linearkugellagern (15; 115) gelagert ist.

2. Antriebsvorrichtung nach Anspruch 1, bei welcher die Linearkugellager (15; 115) Kugeln (151) aufweisen, die aus einem nicht-magnetischen Material hergestellt sind.

3. Antriebsvorrichtung nach Anspruch 2, bei welcher die Kugeln (151) der Linearkugellager (15; 115) aus einem austenitischen Stahl hergestellt sind und eine gehärtete Oberfläche aufweisen.

4. Antriebsvorrichtung nach Anspruch 2, bei welcher die Kugeln (151) der Linearkugellager (15; 115) aus einem Hochleistungskunststoff, insbesondere aus Polyetheretherketon (PEEK) oder Polyphenylensulfid (PPS), hergestellt sind.

5. Antriebsvorrichtung nach einem der Ansprüche 1-4, bei welcher die Linearkugellager (15; 115) Laufbahnbleche (153) aufweisen, die aus einem nicht magnetischen Material hergestellt sind.

6. Antriebsvorrichtung nach einem der Ansprüche 1-5, bei welcher der Stator (10) eine Positionssensorik (16) zur Erfassung der Längsposition des Läufers (20; 120) relativ zum Stator (10) aufweist, und bei welcher der Läufer (20; 120) mit Hilfe der Linearkugellager (15; 115) mit einem festen radialen Abstand zur Positionssensorik (16) geführt ist.

7. Antriebsvorrichtung nach einem der Ansprüche 1-6, bei welcher das Läuferrohr (21) aus oberflächengehärtetem Edelstahl hergestellt ist und seine äussere Oberfläche (21a) geschliffen ist.

8. Antriebsvorrichtung nach einem der Ansprüche 1-7, bei welcher die Linearkugellager (15; 115) Kugeln (151) aufweisen, die aus einem nicht-magnetischen Material hergestellt sind.

9. Antriebsvorrichtung nach einem der Ansprüche 1-8, bei welcher die Linearkugellager (15; 115) im Stator (10) oder in Längsrichtung des Stators vor und hinter dem Stator (10) angeordnet sind.

10. Antriebsvorrichtung nach einem der Ansprüche 1-9, welche eine Zusatzführung aufweist mit einer zum Läufer (20) des tubularen Linearmotors (M1) parallelen Führungsstange (41), die in zusätzlichen Linearkugellagern (42) längsbeweglich gelagert und mit dem Läufer (20) des tubularen Linearmotors (M1) kinematisch gekoppelt ist.

11. Antriebsvorrichtung nach einem der Ansprüche 1-9, welche zwei parallel angeordnete tubulare Linearmotoren (M1, M2) aufweist, wobei die Läufer (20, 120) der zwei parallel angeordneten tubularen Linearmotoren (M1, M2) kinematisch miteinander gekoppelt sind.

12. Antriebsvorrichtung nach Anspruch 11, bei welcher nur einer (M1) der zwei parallel angeordneten tubularen Linearmotoren (M1, M2) eine Positionssensorik (16) zur Erfassung der Position seines Läufers (20) relativ zu seinem Stator (10) aufweist, und bei welcher die Antriebswicklungen (12, 112) der zwei tubularen Linearmotoren (M1, M2) parallel oder in Serie geschaltet sind und von einer einzigen Steuerung (55) bestrombar sind.

13. Antriebsvorrichtung nach einem der Ansprüche 1-9, welche zwei kollinear angeordnete tubulare Linearmotoren (M1, M2) aufweist, wobei die Läufer (20, 120) der zwei kollinear angeordenten tubularen Linearmotoren (M1, M2) über gelenkig verbundene Schwenkarme (61, 161) kinematisch mit einer Aktuatorplatte (60) gekoppelt sind.

14. Antriebsvorrichtung nach einem der Ansprüche 1-9, welche zwei parallel angeordnete tubulare Linearmotoren (M1, M2) aufweist, wobei die Läufer (20, 120) der zwei parallel angeordneten tubularen Linearmotoren (M1, M2) über gelenkig verbundene Schwenkarme (63, 163) kinematisch mit einer Aktuatorplatte (60) gekoppelt sind.

15. Antriebsvorrichtung nach einem der Ansprüche 1-14, bei welcher entweder ein Teil der Kugeln (151) oder alle Kugeln (151) der Linearkugellager (15; 115) oder der zusätzlichen Linearkuggellager (42) selbstschmierend ausgebildet sind, indem sie aus einem Hochleistungskunststoff, insbesondere aus Polyetheretherketon (PEEK) oder Polyphenylensulfid (PPS), unter Zusatz von Festschmierstoffen hergestellt sind.
